# EUROPÄISCHE PATENTSCHRIFT

(11) **EP 1 002 623 B1**
(45) Veröffentlichungstag und Bekanntmachung des Hinweises auf die Patenterteilung: **18.02.2004**
(21) Anmeldenummer: 99122604.4
(22) Anmeldetag: 13.11.1999
(51) Int. Cl.: B23Q 7/04, B23Q 16/00, B23Q 7/00, B23Q 3/18

(54) **Zuführeinrichtung für wenigstens ein Werkstück an einer Bearbeitungsmaschine**
Device for the feeding of at least one workpiece to a machine tool
Dispositif de transfert d'au moins une pièce vers une machine d'usinage

(30) Priorität: 20.11.1998 DE 29820630 U
(43) Veröffentlichungstag der Anmeldung: 24.05.2000
(73) Patentinhaber: Trumpf GmbH & Co, D-71254 Ditzingen (DE)
(72) Erfinder: Karl-Eberhard Häfele, 73979 Süssen (DE)
(74) Vertreter: KOHLER SCHMID + PARTNER

(56) Entgegenhaltungen:
- EP-A- 0 701 882
- EP-A- 0 705 655
- DE-A- 4 037 813
- DE-A- 19 710 447
- DE-U- 29 800 294

## Beschreibung

Die Erfindung betrifft eine Zuführeinrichtung für wenigstens ein Werkstück, insbesondere ein Metallrohr, an einer Bearbeitungsmaschine, an welcher das Werkstück in einer Bearbeitungsposition um eine Werkstückdrehachse drehbar gehalten ist, mit zumindest einer Einspannvorrichtung, welche mit dem daran eingespannten Werkstück relativ zu der Bearbeitungsmaschine gesteuert aus einer Ausgangslage in eine Endlage bewegbar ist, wobei das Werkstück bei in Endlage befindlicher Einspannvorrichtung seine Bearbeitungsposition einnimmt und wobei sich die Einspannvorrichtung an dem eingespannten Werkstück an zwei einander gegenüberliegenden Seiten quer zu der Werkstückdrehachse in einer Einspannrichtung und mit in der Einspannrichtung gleichem Abstand von der Werkstückdrehachse abstützt.

Bekannt sind derartige Zuführeinrichtungen z.B. aus US 5669751, mit Einspannvorrichtungen in Form von Spannzangen. Mittels der vorbekannten Spannzangen wird das betreffende Werkstück aufgenommen, wobei das Werkstück zunächst mit den unteren Spannbacken der Spannzangen unterfahren und anschließend auf den unteren Spannbacken aufliegend mittels der oberen Spannbacken der Spannzangen kraftbeaufschlagt und dadurch eingespannt wird. Die Spannzangen mit dem daran gehaltenen Werkstück werden danach rechnergesteuert zu einer Bearbeitungsmaschine verfahren. Dort wird das Werkstück von den Spannzangen an Spannfutter einer maschinenseitigen Dreheinrichtung übergeben. Das Werkstück nimmt nach Schließen der Spannfutter seine Bearbeitungsposition ein, in welcher es mittels der Dreheinrichtung der Bearbeitungsmaschine um seine Werkstückdrehachse drehbar ist. Die Steuerung der Bewegung der Spannzangen zur funktionssicheren Überführung des zu bearbeitenden Werkstücks von dessen Ablage- in die Bearbeitungsposition erfordert im Falle des Standes der Technik einen verhältnismäßig großen Steuerungsaufwand.

Eine Zuführeinrichtung mit einer oder mehreren einfach zu steuernden Einspannvorrichtungen zu schaffen, ist Aufgabe der vorliegenden Erfindung.

Erfindungsgemäß gelöst wird diese Aufgabe dadurch, daß im Falle einer Zuführeinrichtung der eingangs beschriebenen Art die Einspannvorrichtung in der Einspannrichtung zentrierend ausgebildet ist mit einer zentrischen Bezugsebene, deren Lage bei in Ausgangslage befindlicher Einspannvorrichtung bezüglich der Lage der Werkstückdrehachse bei in Bearbeitungsposition befindlichem Werkstück in der Einspannrichtung definiert ist und daß wenigstens ein Anschlag vorgesehen ist, an welchem sich das Werkstück vor dem Einspannen quer zu der Einspannrichtung und quer zu der Werkstückdrehachse abstützt, wobei die Lage der Werkstückdrehachse bei an dem Anschlag abgestütztem Werkstück bezüglich der Lage der Werkstückdrehachse bei in Bearbeitungsposition befindlichem Werkstück in Richtung der Abstützung des Werkstücks definiert ist und das Werkstück an der in Ausgangslage befindlichen Einspannvorrichtung mit derjenigen Lage der Werkstückdrehachse einspannbar ist, die in der Richtung der Abstützung des Werkstücks an dem Anschlag der Lage der Werkstückdrehachse bei an dem Anschlag abgestütztem Werkstück entspricht. Die Lage der Werkstückdrehachse bei in Bearbeitungsposition befindlichem Werkstück ist durch die Gestaltung der Bearbeitungsmaschine, d.h. konstruktiv, vorgegeben. Durch die zentrierende Ausbildung der Einspannvorrichtung ebenfalls konstruktiv definiert ist die Lage der Werkstückdrehachse in der Einspannrichtung bei in Ausgangslage befindlicher Einspannvorrichtung. In der Einspannrichtung liegt die Werkstückdrehachse bei in Ausgangslage befindlicher Einspannvorrichtung nämlich in der bezüglich der Einspannvorrichtung ortsunveränderlichen zentrischen Bezugsebene der Einspannvorrichtung. Nachdem nun aber die Lage der zentrischen Bezugsebene der Einspannvorrichtung in der Einspannrichtung bezüglich der Lage der Werkstückdrehachse bei in Bearbeitungsposition befindlichem Werkstück definiert ist, gilt gleiches auch für die Lage der Werkstückdrehachse bei in Ausgangslage befindlicher Einspannvorrichtung. Insbesondere liegt die Werkstückdrehachse bei in Ausgangslage befindlicher Einspannvorrichtung unabhängig von den Querschnittsabmessungen des betreffenden Werkstückes in der Einspannrichtung stets in der lagedefinierten zentrischen Bezugsebene der Einspannvorrichtung. Der erfindungsgemäße Anschlag sorgt schließlich dafür, daß die Lage der Werkstückdrehachse bei in Ausgangslage befindlicher Einspannvorrichtung bezüglich der Lage der Werkstückdrehachse bei in Bearbeitungsposition befindlichem Werkstück auch quer zu der Einspannrichtung konstruktiv festgelegt ist. In einer durch die Einspannrichtung sowie die Richtung der Abstützung des Werkstückes an dem Anschlag aufgespannten Koordinatenebene ist folglich neben der Lage der Werkstückdrehachse bei in Bearbeitungsposition befindlichem Werkstück, d.h. bei in Endlage befindlicher Einspannvorrichtung, auch die Lage der Werkstückdrehachse bei in Ausgangslage befindlicher Einspannvorrichtung konstruktiv definiert. Die Steuerung der Relativbewegung von Einspannvorrichtung und Bearbeitungsmaschine, die erforderlich ist, um das an der in Ausgangslage befindlichen Einspannvorrichtung gehaltene Werkstück in seine Bearbeitungsposition zu überführen, gestaltet sich daher äußerst einfach.

Besonders einfach gestaltet sich die Steuerung der Relativbewegung von Einspannvorrichtung und Bearbeitungsmaschine, sofern - wie in Weiterbildung der Erfindung vorgesehen - die Einspannvorrichtung mit dem daran eingespannten Werkstück durch lineare Relativbewegung von Einspannvorrichtung und Bearbeitungsmaschine von der Ausgangslage in die Endlage bewegbar ist.

Die in Anspruch 3 beschriebene Einstellmöglichkeit des wenigstens einen Anschlages erlaubt vorteilhafterweise die Abstimmung der erfindungsgemäßen Zuführeinrichtung auf wechselnde Abmessungen der zu bearbeitenden Werkstücke in Richtung der Abstützung der Werkstücke an dem Anschlag bzw. auf wechselnde Lagen der Werkstückdrehachse in der genannten Richtung. Durch entsprechende Einstellung des oder der Anschläge für das Werkstück lassen sich die Werkstückdrehachsen von Werkstücken mit unterschiedlichen Querschnittsabmessungen in Richtung der Abstützung der Werkstücke in ein und dieselbe, und zwar in die bezüglich der Lage der Werkstückdrehachse bei in Bearbeitungsposition befindlichem Werkstück definierte Lage bringen.

Eine bevorzugte Ausführungsform der erfindungsgemäßen Zuführeinrichtung ist in Anspruch 4 beschrieben. In diesem Fall kann die Einspannvorrichtung im Laufe einer einfach zu steuernden Linearbewegung zunächst das Werkstück aus einer Ablageposition aufnehmen und anschließend mit dem eingespannten Werkstück von ihrer Ausgangslage zu der Bearbeitungsmaschine hin in ihre Endlage verfahren.

Einer möglichst weitgehenden Automatisierung des Betriebes erfindungsgemäßer Zuführeinrichtungen dient das Merkmal von Anspruch 5.

Nachstehend wird die Erfindung anhand schematischer Darstellungen zu Ausführungsbeispielen näher erläutert. Es zeigen:
- Figur 1: eine Zuführeinrichtung für stangenartige Werkstücke an einer Bearbeitungsmaschine mit jeweils einer ersten Bauart einer Einspannvorrichtung sowie eines Werkstück-Anschlages,
- Figur 2: eine weitere Bauart eines Werkstück-Anschlages und
- Figur 3: weitere Bauarten eines Werkstück-Anschlages sowie einer Einspannvorrichtung.

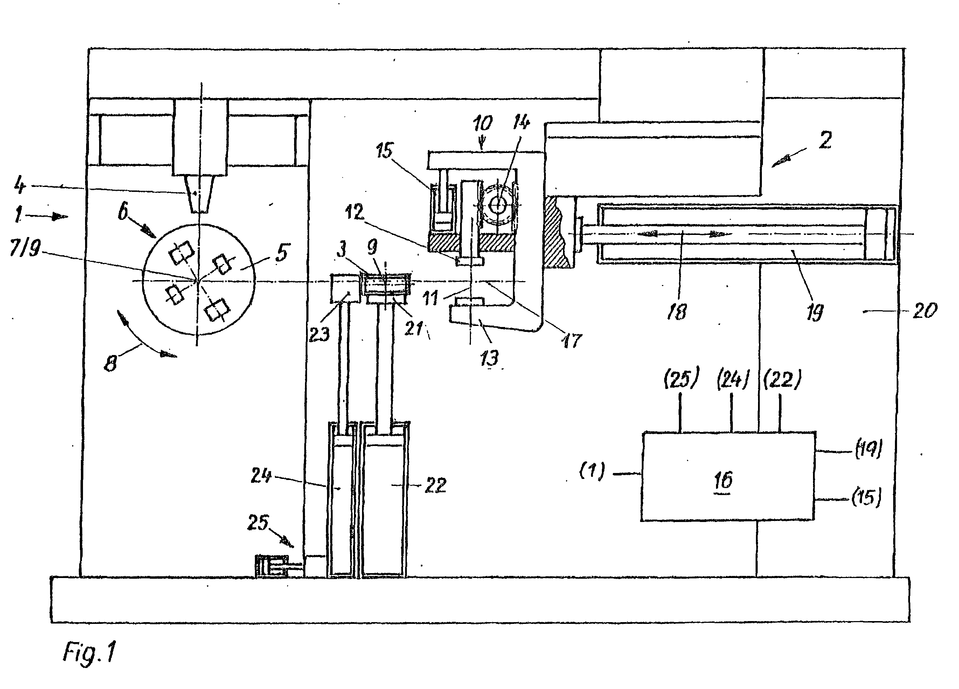

Gemäß Figur 1 ist an einer Bearbeitungsmaschine 1 eine Zuführeinrichtung 2 für stangenartige Werkstücke 3, vorliegend für ein Metallrohr mit Vierkantquerschnitt, vorgesehen. Bei der Bearbeitungsmaschine 1 handelt es sich um eine Laserschneidmaschine mit einem Laserschneidkopf 4. Bei der Bearbeitung sind die Werkstücke 3 mit ihren axialen Enden in maschinenseitigen, zweiachsig zentrierenden Spannfuttern 5 gehalten, von denen in Figur 1 eines gezeigt ist. Die Spannfutter 5 bilden Teile einer Drehvorrichtung 6 der Bearbeitungsmaschine 1 und sind um ihr Spannzentrum 7 in Richtung eines Doppelpfeils 8 drehbar. Die Spannzentren 7 der Spannfutter 5 definieren folglich eine Werkstückdrehachse 9, um welche drehbar das Werkstück 3 in seiner Bearbeitungsposition an der Bearbeitungsmaschine 1 gehalten ist.

Die Zuführeinrichtung 2 umfaßt eine Einspannvorrichtung 10, die in Richtung einer durch eine Gerade 11 veranschaulichten Einspannrichtung zentrierend ausgebildet ist. Spannbacken 12, 13 der Einspannvorrichtung 10 sind zu diesem Zweck in herkömmlicher Weise über ein Umlenkgetriebe 14 miteinander verbunden und mittels eines Spannbackenantriebs 15 in der Einspannrichtung 11 antreibbar. Der Spannbackenantrieb 15 wird gebildet durch eine pneumatisch betriebene Kolben-Zylinder-Einheit und steht mit einer Rechnersteuerung 16 in Verbindung. Eine quer zu der Einspannrichtung 11 verlaufende zentrische Bezugsebene 17 der Einspannvorrichtung 10 ist in Figur 1 strichpunktiert angedeutet.

Die zentrische Bezugsebene 17 der Einspannvorrichtung 10 verläuft parallel zu einer durch einen Doppelpfeil 18 repräsentierten Bewegungsrichtung der Einspannvorrichtung 10. In der zentrischen Bezugsebene 17 der Einspannvorrichtung 10 liegen die Spannzentren 7 der Spannfutter 5 an der Bearbeitungsmaschine 1. In der Bewegungsrichtung 18 ist die Einspannvorrichtung 10 mittels einer pneumatischen Kolben-Zylinder-Einheit 19 linear verschiebbar. Gesteuert wird auch die Kolben-Zylinder-Einheit 19 durch die Rechnersteuerung 16. Zur Führung der Einspannvorrichtung 10 in der Bewegungsrichtung 18 dient eine entsprechende Lagerung an einem Tragrahmen 20 der Zuführeinrichtung 2.

Das an die Spannfutter 5 der Bearbeitungsmaschine 1 zu übergebende Werkstück 3 ist auf einer Werkstückauflage 21 abgelegt. Die Werkstückauflage 21 ist mittels eines Hubantriebes 22 in Form einer weiteren Kolben-Zylinder-Einheit relativ zu der Einspannvorrichtung 10 heb- und senkbar. Die Rechnersteuerung 16 steht mit dem Hubantrieb 22 der Werkstückauflage 21 steuernd in Verbindung. Nachdem die Spannfutter 5 der Bearbeitungsmaschine 1 zweiachsig zentrierend ausgebildet sind, fällt die Werkstückdrehachse 9 im Querschnitt des Werkstücks 3 gesehen in dessen Symmetriezentrum.

Quer zu der Einspannrichtung 11 sowie zu der Werkstückdrehachse 9 ist das Werkstück 3 an einem Anschlag 23 abgestützt. Dieser ist relativ zu dem auf der Werkstückauflage 21 gelagerten Werkstück 3 bzw. relativ zu der Einspannvorrichtung 10 quer zu deren Bewegungsrichtung 18 mittels eines Hubantriebes 24 in Form einer weiteren pneumatischen Kolben-Zylinder-Einheit heb- und senkbar. Außerdem läßt sich der Anschlag 23 in Richtung der Abstützung des Werkstücks 3 mittels einer Verschiebeeinrichtung 25 mit pneumatischer Kolben-Zylinder-Einheit einstellen. Sowohl der Hubantrieb 24 als auch die Verschiebeeinrichtung 25 des Anschlages 23 sind mit der Rechnersteuerung 16 verbunden, die im übrigen auch die Steuerung der Bearbeitungsmaschine 1 übernimmt.

Der Querschnitt des Werkstücks 3 und somit der Abstand der Werkstückdrehachse 9 von der an dem Anschlag 23 anliegenden Wandung des Werkstücks 3 quer zu der Einspannrichtung 11 ist bekannt. Gleichzeitig ist die Lage der das Werkstück 3 abstützenden Fläche des Anschlages 23 bezüglich der Lage der Werkstückdrehachse 9 bei in Bearbeitungsposition befindlichem Werkstück 3 quer zu der Einspannrichtung 11 konstruktiv vorgegeben. Insgesamt ergibt sich also eine konstruktiv definierte Lage der Werkstückdrehachse 9 bei an dem Anschlag 23 abgestütztem Werkstück 3 bezüglich der Lage der Werkstückdrehachse 9 bei in Bearbeitungsposition befindlichem Werkstück 3 in Richtung der Abstützung des Werkstücks 3 und somit quer zu der Einspannrichtung 11.

Mit dieser Lage der Werkstückdrehachse 9 quer zu der Einspannrichtung 11 wird das Werkstück 3 von der entsprechend weit in ihrer Bewegungsrichtung 18 in Figur 1 nach links verfahrenen Einspannvorrichtung 10 aufgenommen. Dabei wird das Werkstück 3 zunächst mit dem Spannbacken 13 unterfahren. Anschließend werden die Spannbacken 12, 13 durch entsprechende Ansteuerung des Spannbackenantriebes 15 im Sinne eines Einspannens des Werkstücks 3 betätigt. Das Werkstück 3 wird dabei aus seiner Ablageposition gemäß Figur 1 geringfügig angehoben, wobei die Werkstückdrehachse 9 quer zu der Einspannrichtung 11 ihre ursprüngliche Lage beibehält. In Einspannrichtung 11 gesehen, liegt die Werkstückdrehachse 9 nun in der zentrischen Bezugsebene 17 der Einspannvorrichtung 10. Bezüglich ihrer Lage bei in der Bearbeitungsposition befindlichem Werkstück 3 ist die Werkstückdrehachse 9 nach dem Einspannen an der in ihrer Ausgangslage befindlichen Einspannvorrichtung 10 in zwei senkrecht zueinander verlaufenden Koordinatenrichtungen, nämlich in der Einspannrichtung 11 sowie in Richtung der ursprünglichen Abstützung des Werkstückes 3 an dem Anschlag 23, konstruktiv lagedefiniert.

Im gezeigten Beispielsfall liegt die Werkstückdrehachse 9 des an der in Ausgangslage befindlichen Einspannvorrichtung 10 gehaltenen Werkstücks 3 in der Einspannrichtung 11 gesehen auf Höhe der Spannzentren 7 der Spannfutter 5. Nach einer entsprechenden Ansteuerung des Hubantriebes 22 sowie des Hubantriebes 24 und einer dadurch bewirkten Absenkung der Werkstückauflage 21 sowie des Anschlages 23 kann die Einspannvorrichtung 10 mit dem daran gehaltenen Werkstück 3 die werkstückauflage 21 sowie den Anschlag 23 in der horizontalen Bewegungsrichtung 18 linear überfahren und dabei das Werkstück 3 in seine Bearbeitungsposition an der Bearbeitungsmaschine 1 überführen, bei welcher dann die Werkstückdrehachse 9 des Werkstückes 3 durch die konstruktiv definierten Spannzentren 7 der Spannfutter 5 verläuft.

Die Länge des linearen Verfahrweges, der von der Einspannvorrichtung 10 zwischen ihrer Ausgangslage und ihrer Endlage an der Bearbeitungsmaschine 1 zurückgelegt werden muß, läßt sich im Falle des dargestellten Beispiels auf einfache Art und Weise dadurch ermitteln, daß die konstruktiv vorgegebenen Koordinaten der Werkstückdrehachse 9 quer zu der Einspannrichtung 11 bei in Ausgangslage sowie bei in Endlage befindlicher Einspannvorrichtung 10 zueinander in Bezug gesetzt werden. Entsprechend einfach gestaltet sich die mittels der Rechnersteuerung 16 bewerkstelligte Steuerung der Kolben-Zylinder-Einheit 19 zum Antrieb der Einspannvorrichtung 10 in deren Bewegungsrichtung 18.

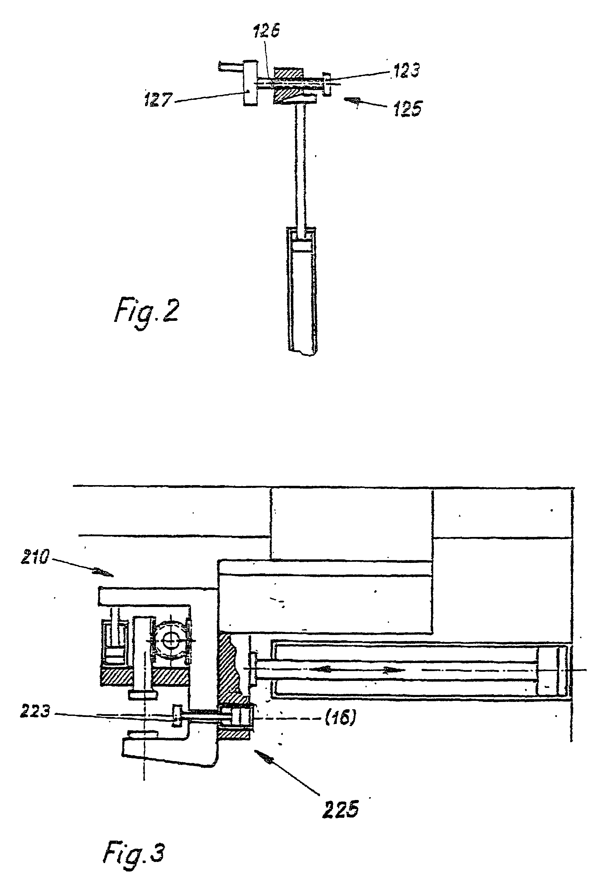

Figur 2 zeigt einen Anschlag 123, der anstelle des Anschlages 23 an der Zuführeinrichtung 2 gemäß Figur 1 verwendet werden kann. Anders als im Falle des Anschlages 23 wird zur Verstellung des Anschlages 123 quer zu der Einspannrichtung 11 der Einspannvorrichtung 10 keine Verschiebeeinrichtung in Form einer Kolben-Zylinder-Einheit sondern statt dessen ein Spindeltrieb 125 mit einer Stellspindel 126 sowie einem Stellrad 127 verwendet.

Figur 3 zeigt eine weitere konstruktive Anschlag-Alternative. So ist gemäß Figur 3 ein Anschlag 223 im Rachen einer Einspannvorrichtung 210 vorgesehen, die im übrigen mit der Einspannvorrichtung 10 gemäß Figur 1 identisch übereinstimmt. Verstellt wird der Anschlag 223 mittels eines Stellantriebes 225, der von der Rechnersteuerung 16 gesteuert wird.

Die Verschiebeeinrichtung 25, der Spindeltrieb 125 sowie der Stellantrieb 225 erlauben eine Verstellung der das in die Bearbeitungsposition zu überführende Werkstück quer zu der Einspannrichtung 11 der Einspannvorrichtung 10, 210 abstützenden Fläche des Anschlages 23, 123, 223 in Richtung der Abstützung und somit quer zu der Einspannrichtung 11. Auf diese Art und Weise kann dafür gesorgt werden, daß die Werkstückdrehachsen der an die Spannfutter 5 der Bearbeitungsmaschine 1 zu übergebenden Werkstücke bei Ausgangslage der Einspannvorrichtung 10, 210 ungeachtet des Werkstückquerschnitts stets die in Figur 1 gezeigte und bezüglich der Lage bei in Bearbeitungsposition befindlichem Werkstück definierte Lage quer zu der Einspannrichtung 11 einnehmen. Die Lage der Werkstückdrehachsen in Einspannrichtung 11 ist - unabhängig von den Querschnittsabmessungen der Werkstücke in dieser Richtung - durch die zentrische Bezugsebene 17 der Einspannvorrichtung 10, 210 fest vorgegeben.

## Patentansprüche

1. Zuführeinrichtung für wenigstens ein Werkstück (3), insbesondere ein Metallrohr, an einer Bearbeitungsmaschine (1), an welcher das Werkstück (3) in einer Bearbeitungsposition um eine Werkstückdrehachse (9) drehbar gehalten ist, mit zumindest einer Einspannvorrichtung (10, 210), welche mit dem daran eingespannten Werkstück (3) relativ zu der Bearbeitungsmaschine (1) gesteuert aus einer Ausgangslage in eine Endlage bewegbar ist, wobei das Werkstück (3) bei in Endlage befindlicher Einspannvorrichtung (10, 210) seine Bearbeitungsposition einnimmt und wobei sich die Einspannvorrichtung (10, 210) an dem eingespannten Werkstück (3) an zwei einander gegenüberliegenden Seiten quer zu der Werkstückdrehachse (9) in einer Einspannrichtung (11) und mit in der Einspannrichtung (11) gleichem Abstand von der Werkstückdrehachse (9) abstützt, **dadurch gekennzeichnet, daß** die Einspannvorrichtung (10, 210) in der Einspannrichtung (11) zentrierend ausgebildet ist mit einer zentrischen Bezugsebene (17), deren Lage bei in Ausgangslage befindlicher Einspannvorrichtung (10, 210) bezüglich der Lage der Werkstückdrehachse (9) bei in Bearbeitungsposition befindlichem Werkstück (3) in der Einspannrichtung (11) definiert ist und daß wenigstens ein Anschlag (23, 123, 223) vorgesehen ist, an welchem sich das Werkstück (3) vor dem Einspannen quer zu der Einspannrichtung (11) und quer zu der Werkstückdrehachse (9) abstützt, wobei die Lage der Werkstückdrehachse (9) bei an dem Anschlag (23, 123, 223) abgestütztem Werkstück (3) bezüglich der Lage der Werkstückdrehachse (9) bei in Bearbeitungsposition befindlichem Werkstück (3) in Richtung der Abstützung des Werkstücks (3) definiert ist und das Werkstück (3) an der in Ausgangslage befindlichen Einspannvorrichtung (10, 210) mit derjenigen Lage der Werkstückdrehachse (9) einspannbar ist, die in der Richtung der Abstützung des Werkstücks (3) an dem Anschlag (23, 123, 223) der Lage der Werkstückdrehachse (9) bei an dem Anschlag (23, 123, 223) abgestütztem Werkstück (3) entspricht.

2. Zuführeinrichtung nach Anspruch 1, **dadurch gekennzeichnet, daß** die Einspannvorrichtung (10, 210) mit dem daran eingespannten Werkstück (3) durch lineare Relativbewegung von Einspannvorrichtung (10, 210) und Bearbeitungsmaschine (1) von der Ausgangslage in die Endlage bewegbar ist.

3. Zuführeinrichtung nach einem der vorhergehenden Ansprüche, **dadurch gekennzeichnet, daß** der wenigstens eine Anschlag (23, 123, 223) in Richtung der Abstützung des Werkstücks (3) einstellbar ist.

4. Zuführeinrichtung nach einem der vorhergehenden Ansprüche, **dadurch gekennzeichnet, daß** die Einspannvorrichtung (10, 210) mit dem daran eingespannten Werkstück (3) in Richtung der Abstützung des Werkstücks (3) an dem Anschlag (23, 123, 223) von der Ausgangslage in die Endlage bewegbar und der Anschlag (23, 123, 223) relativ zu dem Werkstück (3) bzw. der Einspannvorrichtung (10, 210) quer zu deren Bewegungsrichtung (18) hin und her bewegbar ist.

5. Zuführeinrichtung nach einem der vorhergehenden Ansprüche, **dadurch gekennzeichnet, daß** der Anschlag (23, 223) programmgesteuert in Richtung der Abstützung des Werkstücks (3) einstellbar und/oder relativ zu dem Werkstück (3) bzw. der Einspannvorrichtung (10, 210) bewegbar ist.

## Claims

1. Feeding device for at least one workpiece (3), in particular a metal tube, on a processing machine (1), on which the workpiece (3) is held in a processing position rotatably about a pivot axis (9) of a workpiece, having at least one chucking device (10, 210) which can be moved, with the workpiece (3) clamped thereon, in a controlled manner from an initial position into an end position relative to the processing machine (1), the workpiece (3) adopting its processing position when the chucking device (10, 210) is located in the end position, and the chucking device (10, 210) being supported on the clamped workpiece (3) at two mutually opposing sides transversely to the pivot axis (9) of the workpiece in a clamping direction (11) and with equal spacing from the pivot axis (9) of the workpiece in the clamping direction (11), **characterised in that** the chucking device (10, 210) is configured in a centering manner in the clamping direction (11) and has a central reference plane (17) whose position, when the chucking device (10, 210) is located in the initial position, is defined in the clamping direction (11) relative to the position of the pivot axis (9) of the workpiece when the workpiece (3) is located in the processing position, and **in that** there is provided at least one stop (23, 123, 223), on which the workpiece (3) is supported before being clamped transversely to the clamping direction (11) and transversely to the pivot axis (9) of the workpiece, the position of the pivot axis (9) of the workpiece, when the workpiece (3) is supported on the stop (23, 123, 223), being defined relative to the position of the pivot axis (9) of the workpiece when the workpiece (3) is located in the processing position in the direction of support of the workpiece (3), and the workpiece (3) being able to be clamped on the chucking device (10, 210), which is located in the initial position, at the position of the pivot axis (9) of the workpiece that corresponds to the position of the pivot axis (9) of the workpiece in the direction of support of the workpiece (3) on the stop (23, 123, 223) when the workpiece (3) is supported on the stop (23, 123, 223).

2. Feeding device according to claim 1, **characterised in that** the chucking device (10, 210), with the workpiece (3) clamped thereon, can be moved from the initial position into the end position by relative linear movement of the chucking device (10, 210) and the processing machine (1).

3. Feeding device according to either of the preceding claims, **characterised in that** the at least one stop (23, 123, 223) is adjustable in the direction of support of the workpiece (3).

4. Feeding device according to any one of the preceding claims, **characterised in that** the chucking device (10, 210), with the workpiece (3) clamped thereon, can be moved from the initial position into the end position in the direction of support of the workpiece (3) on the stop (23, 123, 223) and the stop (23, 123, 223) can be moved back and forth relative to the workpiece (3) or the chucking device (10, 210) transversely to the direction of movement (18) thereof.

5. Feeding device according to any one of the preceding claims, **characterised in that** the stop (23, 223) can be adjusted in a program-controlled manner in the direction of support of the workpiece (3) and/or can be moved relative to the workpiece (3) or the chucking device (10, 210).

## Revendications

1. Dispositif de transfert d'au moins une pièce (3) à usiner, notamment un tube métallique, dans une machine d'usinage (1) dans laquelle ladite pièce (3) est retenue dans une position d'usinage, avec faculté de rotation autour d'un axe (9) de rotation de ladite pièce, comportant au moins un dispositif d'ablocage (10, 210) mobile d'une position de départ à une position définitive avec la pièce (3) qui y est abloquée, en étant commandé vis-à-vis de la machine d'usinage (1), sachant que la pièce (3) prend sa position d'usinage lorsque le dispositif d'ablocage (10, 210) occupe la position définitive, et sachant que ledit dispositif d'ablocage (10, 210) prend appui contre la pièce (3) abloquée, sur deux côtés mutuellement opposés, dans une direction d'ablocage (11) transversale par rapport à l'axe (9) de rotation de la pièce, et avec espacement identique vis-à-vis dudit axe de rotation (9), dans ladite direction d'ablocage (11), **caractérisé par le fait que** le dispositif d'ablocage (10, 210) est réalisé avec faculté de centrage dans la direction d'ablocage (11), avec un plan central de référence (17) dont la position est bien définie dans la direction d'ablocage (11), vis-à-vis de la position de l'axe (9) de rotation de la pièce, lorsque le dispositif d'ablocage (10, 210) occupe la position de départ et lorsque la pièce (3) se trouve en position d'usinage; et **par le fait qu'**il est prévu au moins une butée (23, 123, 223) contre laquelle la pièce (3) est en appui préalablement à l'ablocage, transversalement par rapport à la direction d'ablocage (11) et transversalement par rapport à l'axe (9) de rotation de la pièce, sachant que la position de l'axe (9) de rotation de la pièce, lorsque ladite pièce (3) est en appui contre la butée (23, 123, 223), est bien définie dans la direction de l'appui de la pièce (3), par rapport à la position dudit axe de rotation (9) lorsque ladite pièce (3) occupe la position d'usinage ; et ladite pièce (3) peut être abloquée, sur le dispositif d'ablocage (10, 210) situé en position de départ, lorsque l'axe (9) de rotation de ladite pièce occupe la position correspondant, dans la direction de l'appui de la pièce (3) contre la butée (23, 123, 223), à la position occupée par l'axe de rotation (9) lorsque ladite pièce (3) est en appui contre ladite butée (23, 123, 223).

2. Dispositif de transfert selon la revendication 1, **caractérisé par le fait que** le dispositif d'ablocage (10, 210) est mobile de la position de départ à la position définitive, avec la pièce (3) à usiner qui y est abloquée, par mouvement relatif linéaire dudit dispositif d'ablocage (10, 210) et de la machine d'usinage (1).

3. Dispositif de transfert selon l'une des revendications précédentes, **caractérisé par le fait que** la butée (23, 123, 223), prévue au minimum, est réglable dans la direction de l'appui de la pièce (3) à usiner.

4. Dispositif de transfert selon l'une des revendications précédentes, **caractérisé par le fait que** le dispositif d'ablocage (10, 210) est mobile de la position de départ à la position définitive, avec la pièce (3) à usiner qui y est abloquée, en direction de l'appui de ladite pièce (3) contre la butée (23, 123, 223); et ladite butée (23, 123, 223) peut être respectivement animée d'un mouvement alternatif vis-à-vis de ladite pièce (3), ou vis-à-vis du dispositif d'ablocage (10, 210), transversalement par rapport à la direction (18) du mouvement de celui-ci.

5. Dispositif de transfert selon l'une des revendications précédentes, **caractérisé par le fait que** la butée (23, 223), commandée par programme, est réglable dans la direction de l'appui de la pièce (3) à usiner, et/ou est respectivement mobile par rapport à ladite pièce (3), ou au dispositif d'ablocage (10, 210).
